# EUROPEAN PATENT APPLICATION

(11) **EP 1 382 471 A1**
(43) Date of publication of application: **21.01.2004**
(21) Application number: 03014796.1
(22) Date of filing: 30.06.2003
(51) Int. Cl.: B60H 1/24

(54) **Air distribution system for the passenger compartment of a motor vehicle.**

(30) Priority: 18.07.2002 IT TO20020631
(71) Applicant: FIAT AUTO S.p.A., 10135 Torino (IT)
(72) Inventor: Tarzia, Antonio, 10065 San Germano Chisone (To) (IT)
(74) Representative: Di Francesco, Gianni

(57) **Abstract**

Conditioning air distribution system for the passenger compartment of a motor vehicle, in which the front doors (8) and the wall (14) of the roof panel are provided with openings (10, 12) and ducts (7, 15, 16, 26) adapted to canalise and distribute in succession in the passenger compartment of the motor vehicle the air flow coming from the aeration/conditioning devices.

## Description

### DESCRIPTION

The present invention refers to an air distribution system for the passenger compartment of a motor vehicle, intended to allow a more even distribution of the cooling/heating air inside the passenger compartment so that passengers feel more comfortable.

Different systems for the distribution of conditioning air are already known. However, most of the known systems use the lower part of the passenger compartment as well as the body sides and the central tunnel, this one being used mostly to convey the air flow toward the backseats.

In larger vehicles intended for passenger a false ceiling (roof panel) is used instead of the body sides and the floor to send canalised air to each seat in the passenger compartment.

Both these systems are not able to provide an even distribution of the air inside the passenger compartment since they use only a part of its structure to convey it.

It is an object of the present invention to overcome the previous problem.

Said object is achieved by the present invention providing a system for the distribution of the air-conditioning inside the passenger compartment of a motor vehicle as claimed in claim 1.

Additional characteristics and advantages will become clear from the following description which refers to the appended figures provided as non-restrictive example in which:

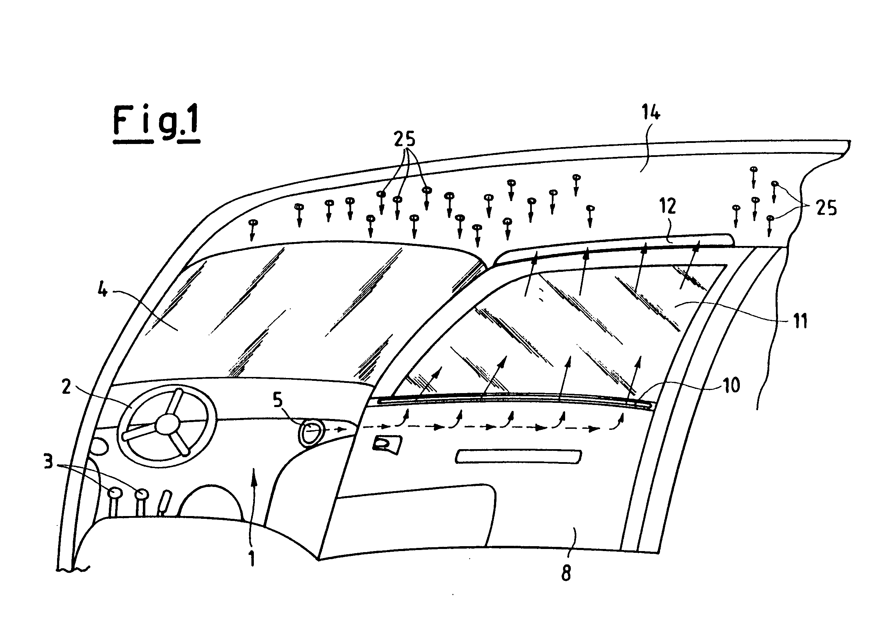

figure 1 is a view of the front inner part of a motor vehicle including the roof panel and the front door, in which there are indicated the flows of the conditioning air of the passenger compartment achieved by means of the system of the present invention;

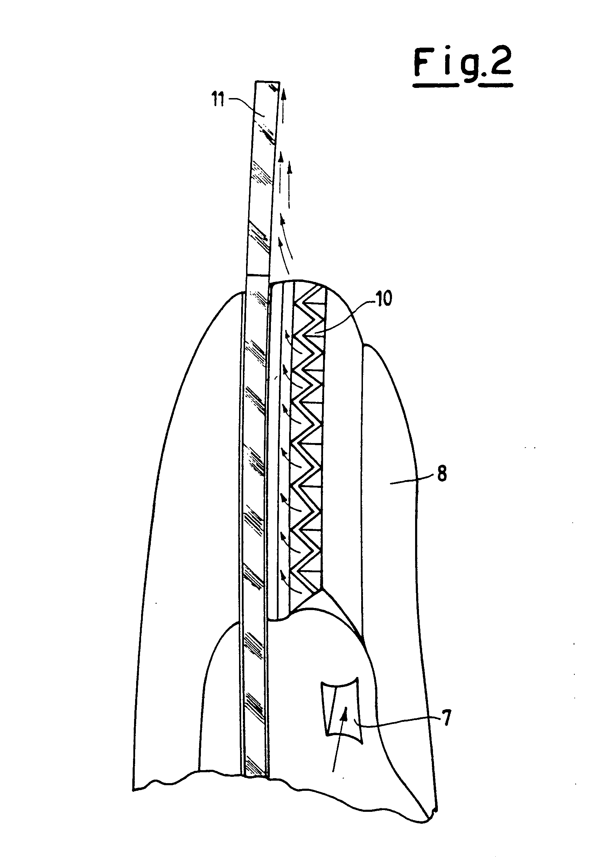

figure 2 is a perspective view of the upper part of a door provided with the air passages according to the system of the invention;

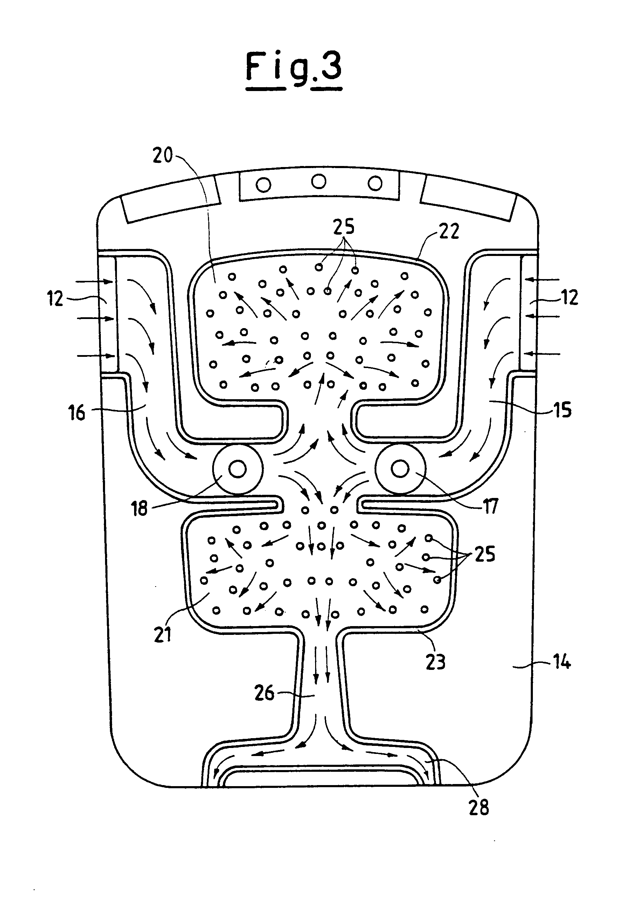

figure 3 is a plan view from above of the panel roof of the motor vehicle in figure 1 with the passages for the air and the devices according to the invention, and

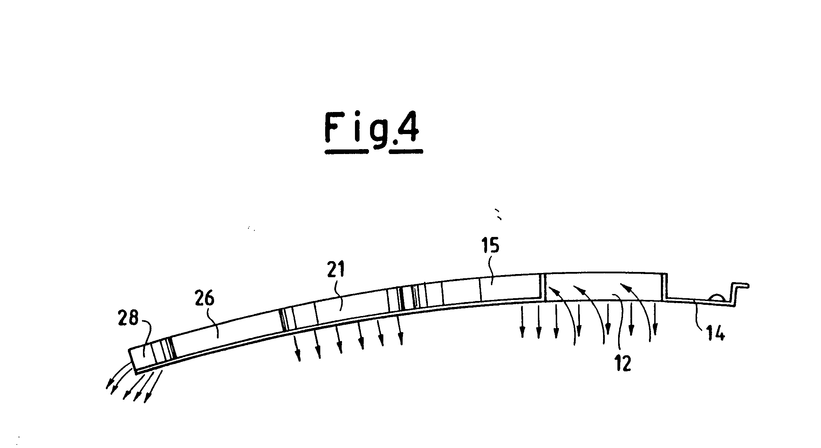

figure 4 is a side view of the roof panel in figure 3.

With reference to the figures, reference number 1 indicates the front part of the passenger compartment of the motor vehicle, provided of the steering wheel 2, the pedals 3 and the transparent windscreen 4. Reference number 5 indicates a pipe union for the conditioning air of the motor vehicle, that can come, according to the need, either directly from the air intakes on the external part of the motor vehicle or through the heating device, or even from the air conditioner (not shown) in case there is one in the motor vehicle. The air flow is conveyed by means of a duct 7 inside the front doors 8 only one of which is here shown. The air is taken through the duct 7 to a slit opening 10 the shape of which is such that the air flow is directed along the wall formed by the crystal 11 of the window. The length of the opening 10 is advantageously calculated so that it affects the whole window, without the passengers feeling uncomfortable because of it. The air flow coming from the opening 10 and passing along the window, is captured by an elongated opening 12 made on the wall of the roof panel in correspondence with the upper edge of each of the two front door openings. On the upper part of the roof panel, between the wall 14 and the sheet of the bodywork there are placed ducts 15 and 16 that lead to two drawing fans 17 and 18. They draw the air coming from the opening 12 located over each one of the front door windows and blow it toward two areas, a front and a back area 20 and 21, defined by side walls 22 and 23 and located in correspondence with the head of the passenger seating both on the front and the rear seats. The wall 14 of the roof panel affected by these areas 20 and 21 is provided with a plurality of through holes 25 adapted to form a sort of grid and to allow the air flow produced by the fans 17 and 18 to reach the upper part of the passenger compartment in order to make them feel comfortable. The back area 21 can be connected by means of a duct 26 to an opening 28 made on the wall (14) of the roof panel and directed toward the rear window in order to defog it.

## Claims

1. Air distribution system for the passenger compartment of a motor vehicle, **characterised in that** the front doors (8) and the wall (14) of the roof panel are provided with openings (10, 12) and ducts (7, 15, 16, 26) adapted to canalise and distribute in succession inside the passenger compartment the air flow coming from the aeration/conditioning devices located in the front part of the passenger compartment.

2. Air distribution system as claimed in claim 1, **characterised in that** the shape of the opening (10) located on the front doors is such that it distributes the air flow basically on the whole surface of the glass of the window and directs it toward its upper part.

3. Air distribution system as claimed in claim 1, **characterised in that** the wall of the roof panel (14) is provided with two openings, each at the upper edge of the front doors.

4. Air distribution system as claimed in claim 1 and 3, **characterised in that** the openings (12) are connected to ducts (15, 16) made on the wall of the roof panel (14) where at least two drawing fans (17, 18) are located.

5. Air distribution system as claimed in claim 1 and 4, **characterised in that** the drawing fans (17, 18) direct the air flow coming from the openings (12) toward two front and back areas (20, 21), made on the wall of the roof panel (14) and defined by walls (20, 21) and located in correspondence with the front and back seats of the motor vehicle.

6. Air distribution system as claimed in claim 1 and 5, **characterised in that** the wall of the roof panel (14) constituting the bottom wall of the front and rear areas is provided with a plurality of through holes (25) forming a sort of grid to let the air pass.

7. Air distribution system as claimed in claim 1 and 5, **characterised in that** the back area (21) is connected by means of a duct (26) to an opening (28) made on the wall of the roof panel (14) and directed toward the rear window.
